# EUROPÄISCHE PATENTSCHRIFT

(11) **EP 3 025 580 B1**
(45) Veröffentlichungstag und Bekanntmachung des Hinweises auf die Patenterteilung: **24.04.2019**
(21) Anmeldenummer: 15195813.9
(22) Anmeldetag: 23.11.2015
(51) Int. Cl.: A01G 13/02

(54) **ÜBERDACHUNGSSYSTEM FÜR PFLANZENKULTUREN**
CANOPY SYSTEM FOR PLANT CULTURES
SYSTEME DE COUVERTURE POUR CULTURES VEGETALES

(30) Priorität: 25.11.2014 DE 102014223976
(43) Veröffentlichungstag der Anmeldung: 01.06.2016
(73) Patentinhaber: BayWa Aktiengesellschaft, 81925 München (DE)
(72) Erfinder: HOLZWARTH, Rudolf, 88255 Baindt (DE)
(74) Vertreter: Pfiz, Thomas

(56) Entgegenhaltungen:
- EP-A2- 2 232 983
- WO-A1-2011/098619
- WO-A1-2014/014365
- DE-U1-202004 020 201
- FR-A1- 2 278 246
- FR-A1- 2 883 320
- SU-A1- 520 076
- "Hail protector for grape vines - has strips of net material on anchored wire frame", DERWENT, 5 July 1976 (1976-07-05), XP002194924,

## Beschreibung

Die Erfindung betrifft ein Überdachungssystem für in parallelen Reihen angeordnete Pflanzenkulturen mit mehreren in den Reihen angeordneten Stützen, jeweils einem längs der Reihen an den Stützen gehaltenen Firstseil und mehreren über den Reihen an den jeweiligen Firstseilen parallel zueinander aufgespannten Dachbahnen.

Aus der DE-A 102 52 468 ist eine derartige Wetterschutzvorrichtung vor allem zum Hagelschutz bekannt. Dort werden zur Firstfixierung eines Schutznetzes Verbindungsmittel vorgeschlagen, die jeweils durch ein den Firstdraht ummantelndes Innenteil und ein unter Zwischenklemmen des Schutznetzes auf das Innenteil aufsetzbares Außenteil gebildet sind. Das Schutznetz wird dort in seinem Mittelbereich eingeklemmt und durch eine Firstnaht unterhalb der Verbindungsmittel fixiert. Aus der WO 2014/014365 A1 ist eine weitere Wetterschutzvorrichtung bekannt.

Ausgehend hiervon liegt der Erfindung die Aufgabe zugrunde, die im Stand der Technik bekannten Schutzvorrichtungen weiter zu verbessern und eine einfache Installation und flexible Nutzung mit geringem Handhabungsaufwand zu ermöglichen.

Zur Lösung dieser Aufgabe wird die in den unabhängigen Patentansprüchen angegebene Merkmalskombination vorgeschlagen. Vorteilhafte Ausgestaltungen und Weiterbildungen der Erfindung ergeben sich aus den abhängigen Ansprüchen.

Die vorliegende Offenbarung geht von dem Gedanken aus, aneinander angrenzende Dachbahnen an ihren beiden Längsseiten über und zwischen den Pflanzenreihen miteinander zu verbinden. Dementsprechend wird gemäß einem ersten Aspekt der Erfindung vorgeschlagen, dass benachbarte Dachbahnen jeweils an einem firstseitigen Längsrand über ein einer Pflanzenreihe zugeordnetes Firstseil hinweg umgefaltet sind, wobei die paarweise überlappenden Längsränder durch mehrere längs des Firstseils verteilte Klemmelemente fixiert sind. Damit ist es möglich, bei reduzierter Bahnbreite dennoch eine gute Abdichtung im Firstbereich zu erzielen. Gegebenenfalls können durchragende Stützen von den Dachbahnen umgriffen werden, so dass Belastungen durch das freie Stützenende vermieden werden. Das Firstseil kann somit auch an Halterungen unterhalb der Stützenenden gespannt werden. Außerdem wird eine flexiblere Anpassung an unterschiedliche Breiten der Pflanzenreihen beidseitig des jeweiligen Firstdrahts ermöglicht. Durch die Fixierung im Firstbereich muss auch nicht die gesamte Kraft für die Dachbahnaufspannung über die Traufseiten aufgenommen werden. Grundsätzlich können in Abhängigkeit von der Geländetopographie am Aufstellort mehr oder weniger ausgeprägte giebelförmige oder weitgehend flache Dachanordnungen realisiert werden.

Vorteilhafterweise umfassen die Klemmelemente jeweils zwei Klemmblöcke, wobei die Klemmblöcke unter Zwischenklemmen der überlappenden Längsränder gegeneinander verspannbar sind, so dass eine hinreichende punktuelle Sicherung der Überlappungsbereiche erreicht wird.

Eine weitere vorteilhafte Ausgestaltung auch im Hinblick auf Handhabungserleichterungen sieht vor, dass die Klemmelemente jeweils eine über das Firstseil hinweg umklappbare biegsame Scharnierlasche aufweisen.

Günstig ist es auch, wenn die Klemmelemente eine Schraubverbindung zum Aufbringen einer Klemmkraft aufweisen.

Eine weitere Verbesserung der Nutzungsmöglichkeiten sieht vor, dass die Dachbahnen an ihrem firstseitigen Längsrand mit einer streifenförmigen Schutzfolie verbunden sind, wobei die Schutzfolie um die zu ihrem firstseitigen Längsrand hin aufgerollte Dachbahn herum umschlagbar ist. Auf diese Weise ist eine geschützte Winterlagerung im aufgerollten Zustand möglich. In diesem Zusammenhang ist es auch von Vorteil, wenn die Dachbahnen in einem aufgerollten Lagerzustand durch Sicherungsbänder gehalten sind, wobei die Sicherungsbänder lösbar mit den Klemmelementen verbunden, insbesondere eingehängt oder eingeclipst sind.

Um eine sichere Firstverbindung zu gewährleisten, können die Dachbahnen einen das Firstseil übergreifenden Randstreifen aufweisen, wobei die Breite des Randstreifens im Bereich von 2cm bis 15cm, vorzugsweise bei etwa 5cm liegen sollte.

Erfindungsgemäß sind zur Lösung der eingangs genannten Aufgabe benachbarte Dachbahnen zwischen den Reihen jeweils an einem traufseitigen Längsrand über ein zick-zack-förmig umgelenktes, elastisch dehnbares Expanderseil miteinander verbunden, wobei das Expanderseil über an den Dachbahnen angebrachte Führungselemente geführt ist. Damit ist es möglich, eine gute Durch- bzw. Entlüftung der Pflanzenkulturen unter den Dachbahnen sicherzustellen und zugleich den Traufbereich ausreichend geschlossen zu halten, um ein unerwünschtes Einnässen der Pflanzen zu vermeiden. Zugleich werden die Dachbahnen durch die elastische Seilverbindung gegen ruckartige mechanische Belastung insbesondere bei Windschlägen geschützt. Durch die besondere Seilführung steht ein großer Dehnweg für Ausgleichsbewegungen auch dann zur Verfügung, wenn die Trauföffnung zwischen den Dachbahnen sehr eng bemessen wurde.

Erfindungsgemäß ist das Expanderseil über einen traufseitigen Randstreifen der Dachbahnen hinweg auf deren Oberseite geführt, so dass eine ausreichende Dehnlänge zur Verfügung steht und zugelich die Ableitung von Niederschlag nicht behindert wird.

Um eine zuverlässige Fixierung zu ermöglichen, ist es von Vorteil, wenn die Führungselemente den traufseitigen Längsrand beidseitig umgreifen und dabei in einer Klemmstellung vorzugsweise mittels einer Schraube fixiert sind.

Auch im Hinblick auf Montageerleichterungen ist es vorteilhaft, wenn die Führungselemente jeweils eine Einhängeöse für das Expanderseil aufweisen. Günstig ist es auch, wenn die Einhängeöse der Führungselemente ein bewegliches Schließsegment zum Ein- und Aushängen des Expanderseils aufweist.

Um punktuelle Belastungen der Dachbahnen zu minimieren, ist es vorteilhaft, wenn die Einhängeösen einen Öffnungsbereich für den Durchtritt des Expanderseils begrenzen, wobei das Expanderseil mit Spiel längsbeweglich in der Öffnung gelagert ist.

Für die Niederschlagsableitung ist es auch vorteilhaft, wenn die Umlenkstellen des Expanderseils in einem seitlichen Abstand zur traufseitigen Randkante der Dachbahnen angeordnet sind, wobei der Abstand im Bereich von 5cm bis 20cm, vorzugsweise bei etwa 7cm bis 8cm liegen sollte.

Eine weitere Verbesserung in diesem Zusammenhang ergibt sich dadurch, dass das Expanderseil in einer Ebene aufgespannt ist, und dass der unter der Ebene liegende traufseitige Randstreifen der Dachbahnen unter einem Winkel vorzugsweise im Bereich von 2° bis 6° zum Boden hin geneigt ist.

Im Folgenden wird die Erfindung anhand der in der Zeichnung schematisch dargestellten Ausführungsbeispiele näher erläutert. Es zeigen:
- Fig. 1: ein Wetterschutz-Überdachungssystem für Pflanzenkulturen mit im Firstbereich geteilten Dachbahnen in ausschnittsweiser perspektivischer Darstellung,
- Fig. 2: ein Klemmelement für eine firstseitige Randverbindung der Dachbahnen in Seitenansicht;
- Fig. 3: einen Abschnitt einer Dachbahn mit einer Schutzfolie in der Draufsicht;
- Fig. 4: einen Vertikalschnitt des Überdachungssystems im Bereich eines Klemmelements mit zwei Ausschnittsvergrößerungen;
- Fig. 5: zwei von Schutzfolien umhüllte aufgerollte Dachbahnen in einem Vertikalschnitt;
- Fig. 6: eine ausschnittsweise perspektivische Darstellung der traufseitigen Randverbindung der Dachbahnen; und
- Fig. 7: einen Vertikalschnitt entlang der Linie 7 - 7 der Fig. 6.

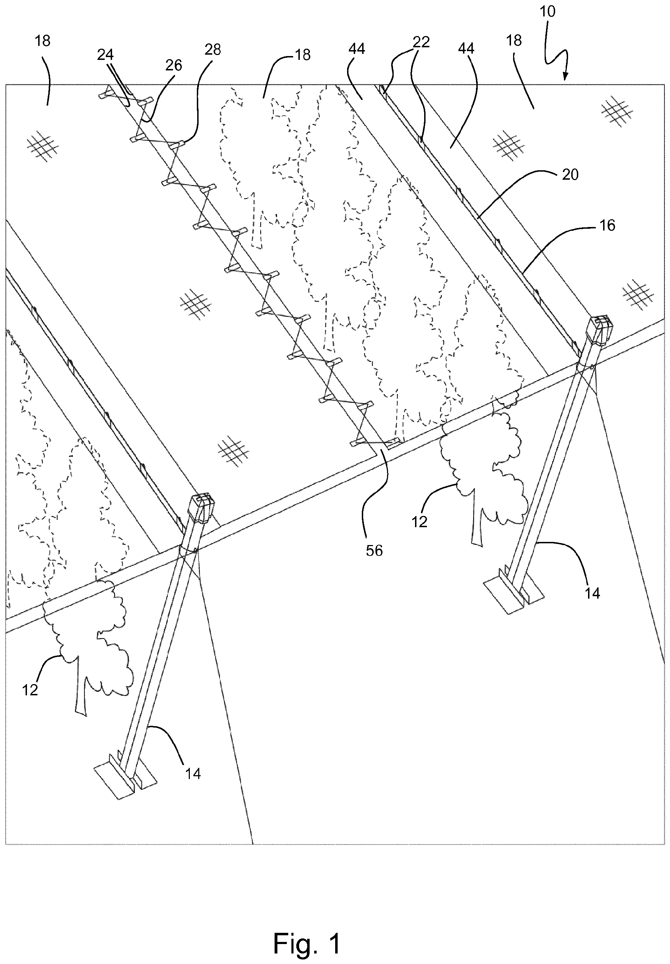

Die in Fig. 1 dargestellte Überdachungssystem 10 ist zum Wetterschutz und insbesondere Hagelschutz von in parallelen Reihen angeordneten Pflanzenkulturen 12 bestimmt. Es umfasst eine Mehrzahl von Stützen 14, die innerhalb jeder Pflanzenreihe im Abstand voneinander im Boden verankert sind und nach oben ragen, sowie jeweils ein längs der Pflanzenreihen über die jeweiligen Stützen 14 gespanntes Trag- bzw. Firstseil 16, und eine Mehrzahl von parallel aufgespannten Dachbahnen 18, wobei die Dachbahnen 18 an ihrem firstseitigen Längsrand 20 über das Firstseil 16 hinweg umgefaltet und mittels längs des Firstseils 16 verteilter Klemmelemente 22 fixiert sind, und wobei die Dachbahnen 18 an ihrem traufseitigen Längsrand 24 paarweise über ein Expanderseil 26 miteinander verbunden sind, wobei das Expanderseil 26 in Führungselementen 28 an den Dachbahnen 18 zick-zack-förmig geführt ist.

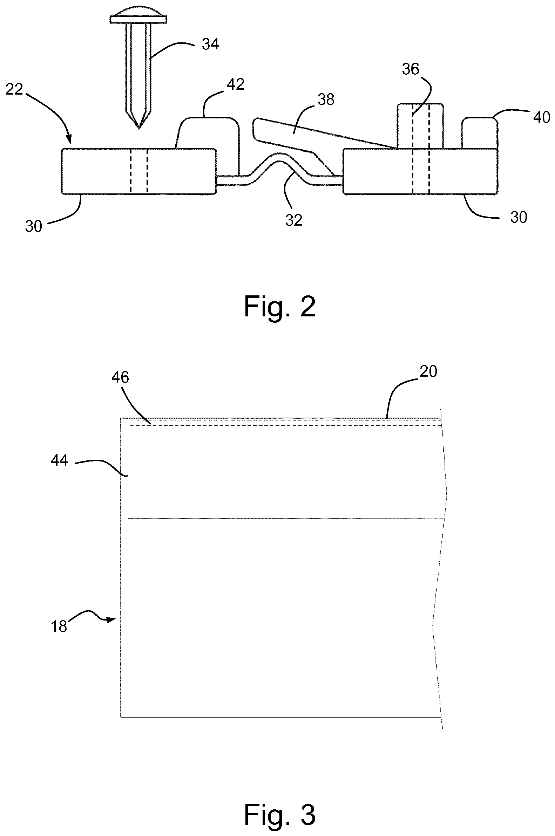

Das in Fig. 2 im nicht montierten Ausgangszustand gezeigte Klemmelement 22 weist zwei Klemmbacken 30 auf, die über eine biegsame Scharnierlasche 32 miteinander verbunden sind und mittels einer Schraube 34 im Bereich eines quer durchgehenden Schraubkanals 36 gegeneinander verspannbar sind. An den Klemmbacken 30 sind Hakenstücke 38, 40, 42 für eine weiter unten erläuterte Winterlagerung der Dachbahnen 18 angeformt.

Wie in Fig. 3 anhand eines Eckabschnitts veranschaulicht, ist am firstseitigen Längsrand 20 der aus einem Folien- und/oder Gewebematerial gebildeten Dachbahnen 18 eine streifenförmige Schutzfolie 44 über eine Schweiß- oder Nähnaht 46 angebracht. Die Breite der Schutzfolie 44 ist so bemessen, dass eine zu dem firstseitigen Längsrand 20 hin aufgerollte Dachbahn 18 als Folienwickel von der Schutzfolie 44 umhüllbar ist.

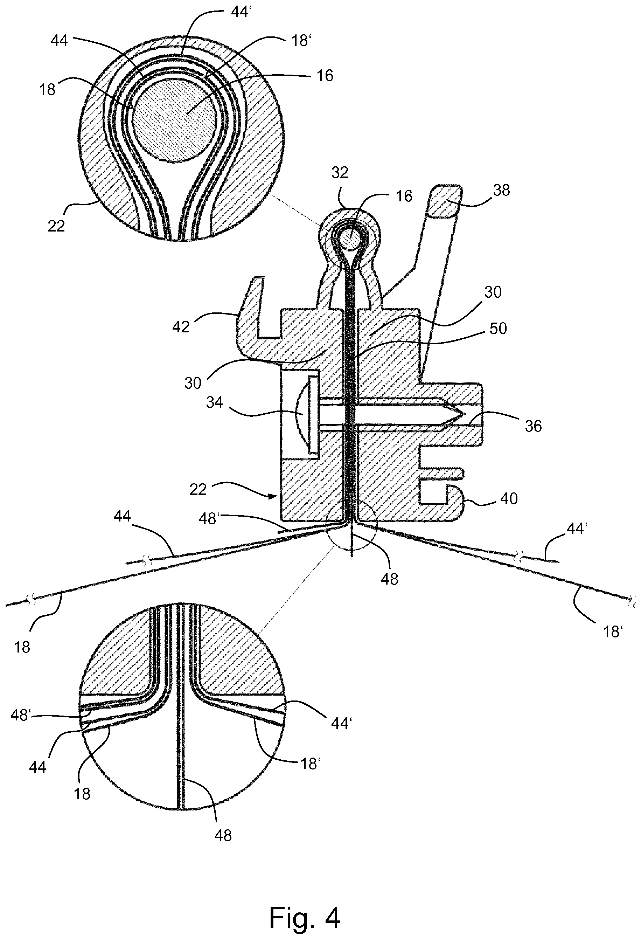

Fig. 4 zeigt den Montagezustand zweier firstseitig verbundener Dachbahnen 18, 18' in einem Vertikalschnitt im Bereich eines Klemmelements 22. In der gezeigten Anordnung ist die zur linken Seite sich erstreckende Dachbahn 18 mit einem ca. 5cm breiten Randstreifen 48 um das Firstseil 16 herum umgeschlagen. Darüber liegt die nach rechts sich erstreckende Dachbahn 18', die mit einem entsprechenden Randstreifen 48' gegenläufig umgeschlagen ist. Auf der Oberseite der Dachbahnen 18, 18' liegt die jeweilige Schutzfolie 44, 44' auf. Der Folienstapel 50 der auf diese Weise umgefalteten Dachbahnen 18, 18' wird zwischen den Klemmbacken 30 des Klemmelements 22 eingeklemmt, wobei die in den Gewindekanal 36 eingeschraubte Klemmschraube 34 für eine hinreichende Klemmkraft sorgt.

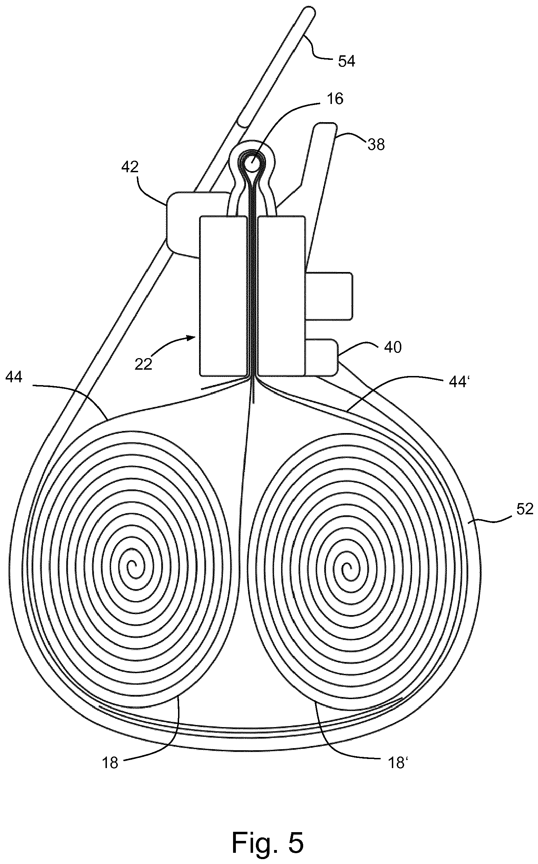

Wie in Fig. 5 gezeigt, können die Dachbahnen 18, 18' über einer Pflanzenreihe beispielsweise zur Winterlagerung außerhalb der Vegetationsperiode in gerollter Form gelagert werden, ohne dass die Klemmelemente 22 gelöst werden müssten. Zu diesem Zweck wird zunächst die eine Dachbahn 18 zu dem Firstseil 16 hin aufgerollte und in die zugehörige Schutzfolie 44 eingeschlagen. Der Folienwickel kann über ein nicht gezeigtes Fixierseil an dem Hakenstück 38 zwischenfixiert werden. Sodann wird von der anderen Seite der Pflanzenreihe her die Dachbahn 18' aufgerollt und ebenfalls in die zugehörige Schutzfolie 44 eingeschlagen. Abschließend wird ein endseitig an dem Hakenstück 40 eingerastetes Sicherungsband 52 um die Folienwickel herumgeführt und in das Hakenstück 42 eingehängt. Das Sicherungsband 52 kann hierfür als Lochband ausgeführt und mit einer Griffschlaufe 54 versehen sein.

Die Dachbahnen 18 können insgesamt flach oder in einer giebelartigen Konfiguration aufgespannt werden. In dem in Fig. 1 gezeigten aufgespannten Zustand überdecken die Dachbahnen 18 die Pflanzenreihen 12 und die dazwischen befindlichen Arbeitsgassen. Zwischen den traufseitigen Längsrändern 24 wird dabei ein Öffnungsbereich 56 freigehalten, um eine Entlüftungsfunktion zu gewährleisten und Niederschlag, insbesondere Hagel ableiten zu können. Hingegen sollte für einen Schutz gegen direkte Niederschlagseinwirkung und gegen Frost der Öffnungsbereich möglichst eng bemessen sein. Wie vorstehend erwähnt, kommt hierfür ein Expanderseil 26 zum Einsatz, welches die Dachbahnen 18 einerseits auf Spannung halten und andererseits vor ruckartigen Bewegungen schützen soll.

Damit das Expanderseil 26 die geforderten Funktionen ausreichend erfüllen kann, muss ein hinreichender Dehnweg zur Verfügung stehen. Dieser wird durch den Abstand der das Expanderseil 26 führenden Umlenkstellen längs und quer zu den Dachbahnen 18 bestimmt. Grundsätzlich gilt hier, je enger die Umlenkstellen in Querrichtung voneinander beabstandet sind, desto enger müssen diese auch in Längsrichtung positioniert werden, was wiederum eine ökonomische Dimension nach sich zieht.

Um eine möglichst enge Folienanordnung mit einer Lücke von maximal 20cm zu erhalten, werden plakettenartige Führungselemente 28 eingesetzt, die längs der traufseitigen Längsränder 24 verteilt angebracht sind und an benachbarten Dachbahnen reihenförmig versetzt zueinander angeordnet sind.

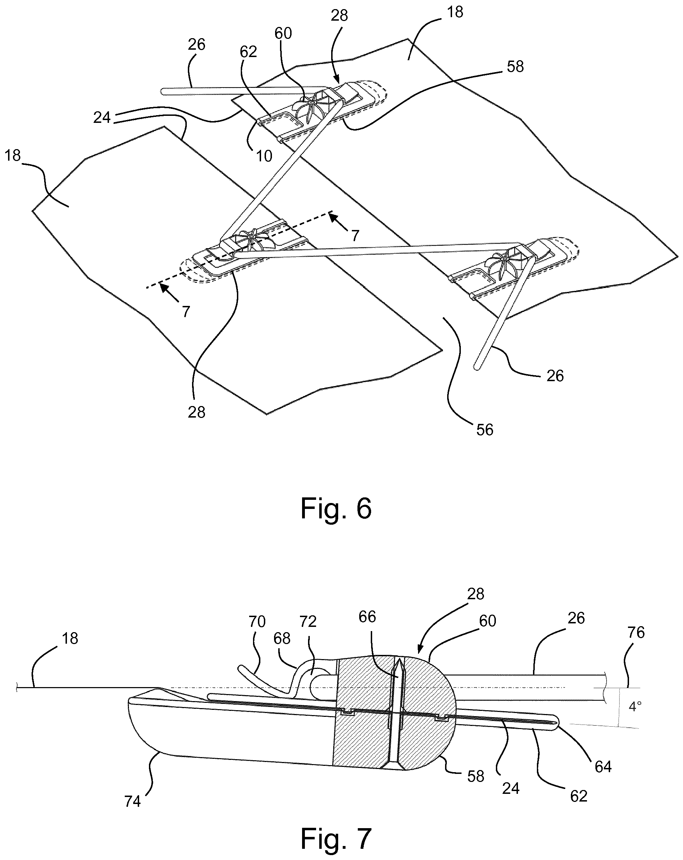

Wie am besten aus Fig. 6 und 7 ersichtlich, besitzen die Führungselemente 28 zwei Klemmhälften 58, 60, die über eine Verbindungslasche 62 mit mittigem Filmscharnier 64 verbunden sind. Über die lange Verbindungslasche 62 lassen sich die Klemmhälften 58, 60 relativ weit, z.B. ca. 8cm in das Folienmaterial der Dachbahn 18 einführen und dort unter Zwischenklemmen des traufseitigen Längsrandes 24 mittels Schraube 66 zugfest fixieren. Die an der Oberseite der Dachbahn 18 angeordnete Klemmhälfte 60 ist mit einer Einhängeöse 68 als Umlenkstelle für das Expanderseil 26 versehen. Diese weisen eine bewegliche Schließzunge 70 zum einfachen seitlichen Ein- und Aushängen des Expanderseils auf. Die Einhängeösen 68 begrenzen einen Öffnungsbereich 72, so dass das Expanderseil 26 mit Spiel längsbeweglich gelagert ist.

Um ein Kippen der Führungselemente 28 zu vermeiden, ist an der unteren Klemmhälfte 58 ein Stabilisierungsfortsatz 74 angebracht, der in die gestraffte Dachbahn 18 hineinragt. Im gespannten Zustand ist das Expanderseil 26 zick-zack-förmig in einer Ebene 76 aufgespannt, während der traufseitige Längsrand 24 aufgrund der Abstützung durch den Stabilisierungsfortsatz 74 um einen Winkel von beispielsweise 4° leicht nach unten geneigt ist. Damit wird der Ablauf von Niederschlag und ggf. Hagel begünstigt und das Bilden von Wassersäcken am Rand der Dachbahn 18 minimiert.

Zusammenfassend ist folgendes festzuhalten: Die Erfindung betrifft ein Überdachungssystem für in parallelen Reihen angeordnete Pflanzenkulturen 12 mit mehreren in den Reihen angeordneten Stützen 14, jeweils einem längs der Reihen über die Stützen 14 gespannten bzw. an den Stützen gehaltenen Firstseil 16 und mehreren aus einem flexiblen Folien- und/oder Gewebematerial gebildeten, über den Reihen an den jeweiligen Firstseilen 16 parallel zueinander aufspannbaren Dachbahnen 18. Ein erster Erfindungsaspekt sieht vor, dass benachbarte Dachbahnen 18 jeweils an einem firstseitigen Längsrand 20 über ein Firstseil 16 hinweg umgefaltet sind, und wobei die paarweise überlappenden Längsränder 20 durch mehrere längs des Firstseils 16 verteilte Klemmelemente 22 fixiert sind. Gemäß einem weiteren Erfindungsaspekt sind benachbarte Dachbahnen 18 zwischen den Reihen jeweils an einem traufseitigen Längsrand 24 über ein zick-zack-förmig umgelenktes, elastisch dehnbares Expanderseil 26 miteinander verbunden, wobei das Expanderseil 26 über an den Dachbahnen 18 angebrachte Führungselemente 28 geführt ist.

## Patentansprüche

1. Überdachungssystem für in parallelen Reihen angeordnete Pflanzenkulturen (12) mit mehreren in den Reihen angeordneten Stützen (14), jeweils einem längs der Reihen gespannten, an den Stützen (14) gehaltenen Firstseil (16) und mehreren aus einem flexiblen Folien- und/oder Gewebematerial gebildeten, über den Reihen an den jeweiligen Firstseilen (16) parallel zueinander aufspannbaren Dachbahnen (18), **dadurch gekennzeichnet, dass** benachbarte Dachbahnen (18) zwischen den Reihen jeweils an einem traufseitigen Längsrand (24) über ein zick-zack-förmig umgelenktes, elastisch dehnbares Expanderseil (26) miteinander verbunden sind, wobei das Expanderseil (26) über an den Dachbahnen (18) längs der traufseitigen Längsränder (24) verteilt angebrachte und an den benachbarten Dachbahnen (18) reihenförmig versetzt zueinander angeordnete plakettenartige Führungselemente (28) geführt ist, wobei das Expanderseil (26) über einen traufseitigen Randstreifen der Dachbahnen (18) hinweg auf deren Oberseite geführt ist.

2. Überdachungssystem nach Anspruch 1, **dadurch gekennzeichnet, dass** die Führungselemente (28) den traufseitigen Längsrand (24) beidseitig umgreifen und dabei in einer Klemmstellung vorzugsweise mittels einer Schraube (66) fixiert sind.

3. Überdachungssystem nach Anspruch 1 oder 2, **dadurch gekennzeichnet, dass** die Führungselemente (28) jeweils eine Einhängeöse (68) für das Expanderseil (26) aufweisen.

4. Überdachungssystem nach Anspruch 3, **dadurch gekennzeichnet, dass** die Einhängeöse (68) der Führungselemente (28) ein bewegliches Schließsegment (70) zum Ein- und Aushängen des Expanderseils (26) aufweist.

5. Überdachungssystem nach Anspruch 3 oder 4, **dadurch gekennzeichnet, dass** die Einhängeösen (68) eine Öffnung (72) für den Durchtritt des Expanderseils (26) begrenzen, wobei das Expanderseil (26) mit Spiel längsbeweglich in der Öffnung (72) gelagert ist.

6. Überdachungssystem nach einem der Ansprüche 1 bis 5, **dadurch gekennzeichnet, dass** die Umlenkstellen des Expanderseils (26) in einem seitlichen Abstand zum traufseitigen Längsrand (24) der Dachbahnen (18) angeordnet sind, wobei der Abstand im Bereich von 5cm bis 20cm, vorzugsweise bei etwa 7cm bis 8cm liegt.

7. Überdachungssystem nach einem der Ansprüche 1 bis 6, **dadurch gekennzeichnet, dass** das Expanderseil (26) in einer Ebene (76) aufgespannt ist, und dass der unter der Ebene (76) liegende traufseitige Randstreifen der Dachbahnen (18) unter einem Winkel vorzugsweise im Bereich von 2° bis 6° zum Boden hin geneigt ist.

## Claims

1. Canopy system for plant cultures (12) arranged in parallel rows, comprising a plurality of supports (14) arranged in the rows, a ridge cable (16) that is pulled taut along the rows in each case and held on the supports (14), and a plurality of roofing sheets (18) made of a flexible sheet material and/or woven material that can be clamped above the rows to the relevant ridge cable (16) so as to be parallel to one another, **characterized in that** adjacent roofing sheets (18) are interconnected between the rows at an eaves-side longitudinal edge (24) in each case by means of a resiliently stretchable bungee cord (26) that is deflected in a zig-zag shape, the bungee cord (26) being guided by means of plaque-like guide elements (28) that are distributed on the roofing sheets (18) along the eaves-side longitudinal edges (24) and arranged on adjacent roofing sheets (18) so as to be offset with respect to one another in rows, the bungee cord (26) being guided over an eaves-side edge portion of the roofing sheets (18) on the upper side thereof.

2. Canopy system according to claim 1, **characterized in that** the guide elements (28) clasp both sides of the eaves-side longitudinal edge (24) and are fixed in a clamped position, preferably by means of a screw (66).

3. Canopy system according to either claim 1 or claim 2, **characterized in that** the guide elements (28) each comprise a mounting eye (68) for the bungee cord (26).

4. Canopy system according to claim 3, **characterized in that** the mounting eye (68) of the guide elements (28) comprises a moveable closing segment (70) for mounting and unmounting the bungee cord (26).

5. Canopy system according to either claim 3 or claim 4, **characterized in that** the mounting eyes (68) delimit an opening (72) for the bungee cord (26) to pass through, the bungee cord (26) being mounted in the opening (72) with play so as to be longitudinally movable.

6. Canopy system according to any of claims 1 to 5, **characterized in that** the deflection points of the bungee cord (26) are arranged at a lateral distance from the eaves-side longitudinal edge (24) of the roofing sheets (18), the distance being in the range of from 5 cm to 20 cm, preferably approximately 7 cm to 8 cm.

7. Canopy system according to any of claims 1 to 6, **characterized in that** the bungee cord (26) is tensioned in a plane (76), and **in that** the eaves-side edge portion of the roofing sheets (18) located below the plane (76) is inclined toward the ground at an angle preferably in the range of from 2° to 6°.

## Revendications

1. Système de couverture, destiné à des cultures de plantes (12) disposées en rangées parallèles, comportant une pluralité de supports (14) disposés dans les rangées, un câble faîtier (16) tendu le long de chacune des rangées et maintenu sur les supports (14), et une pluralité de panneaux de toit (18) formés d'un matériau flexible en film et/ou en tissu et pouvant être tendus parallèlement les uns aux autres au-dessus des rangées sur les câbles faîtiers respectifs (16), **caractérisé en ce que** des panneaux de toit adjacents (18) sont reliés entre eux entre les rangées à chaque fois au niveau d'un bord longitudinal (24) côté gouttière par un câble extenseur (26) élastiquement extensible et dévié en zig-zag, le câble extenseur (26) étant guidé par des éléments de guidage (28) en forme de plaquette qui sont montés de manière répartie sur les panneaux de toit (18) le long des bords longitudinaux (24) côté gouttière et disposés en rangées de manière décalée les unes par rapport aux autres sur les panneaux de toit adjacents (18), le câble extenseur étant guidé au-delà d'une bande de bord côté gouttière des panneaux de toit (18) sur leur face supérieure.

2. Système de couverture selon la revendication 1, **caractérisé en ce que** les éléments de guidage (28) entourent de part et d'autre le bord longitudinal (24) côté gouttière et y sont fixés dans une position de serrage de préférence au moyen d'une vis (66).

3. Système de couverture selon la revendication 1 ou 2, **caractérisé en ce que** les éléments de guidage (28) comportent chacun un oeillet de suspension (68) destiné au câble extenseur (26).

4. Système de couverture selon la revendication 3, **caractérisé en ce que** l'oeillet de suspension (68) des éléments de guidage (28) comporte un segment de fermeture mobile (70) destiné à accrocher et décrocher le câble extenseur (26).

5. Système de couverture selon la revendication 3 ou 4, **caractérisé en ce que** les oeillets de suspension (68) limitent une ouverture (72) destinée au passage du câble extenseur (26), le câble extenseur (26) étant monté avec jeu dans l'ouverture (72) de façon à pouvoir être déplacé longitudinalement.

6. Système de couverture selon l'une des revendications 1 à 5, **caractérisé en ce que** les points de déviation du câble extenseur (26) sont disposés à une distance latérale du bord longitudinal (24) côté gouttière des panneaux de toit (18), la distance étant allant de 5 cm à 20 cm, de préférence d'environ 7 cm à 8 cm.

7. Système de couverture selon l'une des revendications 1 à 6, **caractérisé en ce que** le câble extenseur (26) est tendu dans un plan (76), et **en ce que** la bande de bord côté gouttière des panneaux de toit (18), située sous le plan (76), est inclinée vers le sol, selon un angle de préférence allant de 2° à 6°.
